# EUROPEAN PATENT APPLICATION

(11) **EP 3 290 720 A1**
(43) Date of publication of application: **07.03.2018**
(21) Application number: 17188856.3
(22) Date of filing: 31.08.2017
(51) Int. Cl.: F16B 7/04, F16B 7/18

(54) **ANGLER'S ACCESSORY**

(30) Priority: 01.09.2016 GB 201614849
(71) Applicant: Frenzee Limited, Newtown, Powys SY16 4LE (GB)
(72) Inventor: Pryce, John Michael, Powys, SY16 4NU (GB); Bancroft, Brian Roy, Powys, SY16 1NP (GB)
(74) Representative: Makovski, Priscilla Mary

(57) **Abstract**

A device (1) is for attaching an accessory to an elongate member of an angler's equipment, such as a seat box. The accessory has a terminal member with a longitudinal axis, and the device comprises a base member (2) and an intermediate assembly (3), the base member being adapted for connection to the elongate member, and the intermediate assembly being adapted for connection to the accessory and being mounted on the base member for relative rotation about the longitudinal axis. In order to provide adjustment of the accessory, to place it in any desired orientation, the intermediate assembly (3) has a releasable locking mechanism (17) for locking the intermediate assembly (3) and the base member (2) against relative rotation. A second locking mechanism (18) may lock the accessory against axial movement.

## Description

This invention relates to a device for attaching an accessory to an angler's equipment such as a seat box, a chair or similar equipment having elongate members.

A seat box is a piece of angler's equipment providing the angler with a seat and a foot support, storage for small items, and support for accessories such as bait containers, rod rests and the like. A seat box typically has a frame with several legs of adjustable length to allow for any unevenness of the ground. Similarly, a chair may have adjustable legs to allow for unevenness of the ground.

GB 2 394 505 shows a seat box with a clamp arrangement which fits onto a leg and provides support for an accessory. The clamp arrangement has a sleeve slidable along the leg and a clamp member surrounding the sleeve and rotatable relative to it. A bolt passing through two parts of the clamp member is tightened to clamp the sleeve on the leg and the clamp member to the sleeve. The clamp member carries the accessory. The accessory normally terminates in a male thread, which then screws into a member of square cross-section. The square member is secured in a complementary recess in the clamp member and is secured by a grub screw. This provides a secure attachment for the accessory, together with height adjustment and rotation in the plane perpendicular to the leg. However, the use of a grub screw means it is difficult to change the accessory quickly.

GB 2 528 325 shows a similar arrangement, but with a quick release locking mechanism for the accessory, in the form of a cam lock. The accessory is attached via an adapter of square cross-section, received in a complementary recess in the clamp member. The cam lock has a locking plate which is moved into and out of the recess by a cam lever. This provides easy release and attachment of the accessory, as well as height adjustment on the leg, and rotation in the plane perpendicular to the leg.

Both of these constructions have the disadvantage that, if the leg itself is not vertical, the plane perpendicular to it will not be horizontal, and the accessory will be held at an angle to the horizontal. Because of the square cross-section of the adapter, there will only be a 90° adjustment. For some accessories it will not matter if they are held at a small angle to the horizontal, but for a bait holder in particular this could be disadvantageous.

There are also arrangements where an accessory is simply screwed onto a clamp member, rather than a square member. The accessory may have a male or female thread, but in either case it is necessary for the accessory to be screwed on tightly so that it is firmly secured. This may also result in the accessory being at an incorrect angle to the horizontal.

According to the present invention, we provide a device for attaching an accessory to an elongate member of an angler's equipment, where the accessory has a terminal member with a longitudinal axis, the device comprising a base member and an intermediate assembly, the base member being adapted for connection to the elongate member, and the intermediate assembly being adapted for connection to the accessory and being mounted on the base member for relative rotation about the longitudinal axis, the intermediate assembly having a releasable locking mechanism for locking the intermediate assembly and the base member against relative rotation.

The ability of the intermediate assembly to rotate relative to the base member about the longitudinal axis provides adjustment of the accessory, enabling the plane perpendicular to the elongate member to be horizontal, or indeed at any desired angle relative to the elongate member. The accessory can then be placed in any desired orientation.

Preferably the locking mechanism comprises a clamping ring having a screw-threaded engagement with the base member. In a release position the clamping ring allows relative rotation of the intermediate assembly and the base member, and in a locked position such relative rotation is prevented. Conveniently in the locked position the clamping ring causes a frictional engagement between the intermediate assembly and the base member.

The terminal member of the accessory may have a screw-threaded engagement with a polygonal member or the intermediate assembly. The terminal member may have a male screw thread which screws into a complementary screw-threaded recess in the polygonal member. Alternatively, the accessory may have an integral polygonal member. The polygonal member is received in a corresponding recess in the intermediate assembly. Alternatively, the terminal member of the accessory may have a female screw thread. In this case, the polygonal member or the intermediate assembly has a corresponding male screw thread.

Where a polygonal member is used the device may also have a second releasable locking mechanism for locking the polygonal member against axial movement. The second locking mechanism conveniently comprises a cam lock mechanism. This provides a quick release for the polygonal member, enabling the accessory to be changed quickly.

The base member may form part of a clamp arrangement adapted to be attached to the elongate member, such as a leg of the seat box. Alternatively the base member may be adapted for attachment to a bar which in turn is attached to elongate member.

The base member preferably has a substantially cylindrical outer end forming a bore for receiving the intermediate assembly, and an external screw-thread for engagement with the clamping ring.

The intermediate assembly conveniently comprises an outer part adapted for connection to the accessory, and an inner part secured to the outer part and rotatable in the bore in the base member.

The inner part preferably has a radial flange providing an axial face adapted to engage a corresponding axial face on the base member. The clamping ring has an internal screw thread for engagement with the external screw thread on the base member, and an abutment face adapted to engage with a corresponding abutment face on the inner part. When the clamping ring is screwed into the locked position the abutment faces engage to move the inner part axially towards the base member until the axial faces engage. The frictional engagement between the axial faces prevents rotation of the inner part in the bore of the base member. The inner part and the base member may also have corresponding surfaces which engage axially when the clamping ring is screwed into the locked position. The surfaces may be provided with small teeth which engage and mesh.

The outer part may have a cylindrical profile, with a recess for receiving the polygonal member or the terminal member of the accessory. If the cam lock mechanism is provided, the outer part also has a radial aperture opening into the recess. The cam lock mechanism is mounted on the outer part, and comprises a cam lever rotatably mounted on the outer part and acting on a locking plate mounted in the aperture. Alternatively, the outer part may have a square profile and recess for receiving the accessory, or be provided with a male screw-threaded member to which the accessory is connected.

Embodiments of the invention are illustrated, by way of example, in the accompanying drawings, in which:-
**Figure 1** is a perspective view of a device for attaching an accessory to an angler's seat box;
**Figure 2** is a section taken horizontally through the device of Figure 1;
**Figure 3** is a section taken vertically through the device of Figure 1;
**F**igure **4** is an exploded view of part of the device of Figure 1;
**Figures 5 and 6** are similar to Figures 2 and 3, and show a modification;
**Figure 7** is similar to Figure 2, but shows a modified base member;
**Figure 8** is similar to Figure 3, but shows the modified base member;
**Figure 9** is an exploded view of the device of Figures 1 to 4 connected to the device of Figures 7 and 8 by a bar;
**Figure 10** shows the components of Figure 9 as assembled;
**Figures 11 to 13** are similar to Figures 1 to 3, but show a modified intermediate assembly; and
**Figures 14 to 16** are similar to Figures 11 to 13 and show a further modified intermediate assembly.

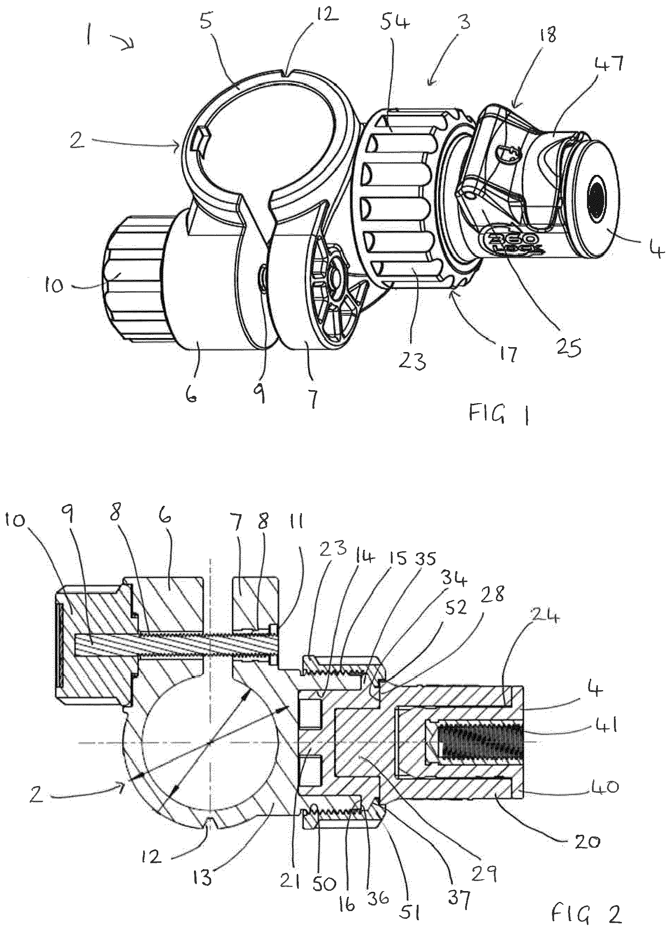

Figures 1 to 4 show a device 1 for attaching an accessory (not shown) to an elongate member (not shown) of an angler's equipment such as a seat box. It will be appreciated that the elongate member may be a leg of the seat box or other chair, or indeed any suitable elongate member. The device 1 comprises a base member 2 and an intermediate assembly 3. In this embodiment a polygonal member 4 is provided as a terminal member of the accessory.

The base member 2 is adapted for connection to the elongate member. The base member 2 comprises a cylindrical part 5 split at a circumferential point and formed with two outwardly-projecting arms 6, 7. The arms 6, 7 have aligned internally screw-threaded transverse apertures 8 in which a bolt 9 is accommodated. The bolt 9 has a manually-operable head 10 at one end and a washer 11 captive on the other end. Tightening of the bolt 9 serves to bring the arms 6, 7 towards each other, in order to clamp the cylindrical part 5 round the elongate member. An external notch 12 circumferentially opposite the arms 6, 7 accommodates the movement of the arms 6, 7. The base member 2 also has a hub portion 13 extending laterally from the cylindrical part 5 and adapted to mount the intermediate assembly 3. The hub portion 13 is also cylindrical in profile, and has a cylindrical outward-facing blind bore 14 with an end surface 55 and an external screw thread 15. The outer end of the hub portion 13 forms an axial face 16.

The intermediate assembly 3 receives the polygonal member 4, and is mounted on the base member 2 for relative rotation about the axis of the bore 14. The intermediate assembly 3 includes a first releasable locking mechanism 17 for locking the intermediate assembly 3 and the base member 2 against relative rotation, and a second releasable locking mechanism 18 for locking the polygonal member 4 against axial movement.

The intermediate assembly 3 comprises outer and inner parts 20, 21, a cam lock assembly 22 as the locking mechanism 18 and a clamping ring 23 as the locking mechanism 17.

The outer part 20 is a substantially cylindrical member of stepped outline, having an open-ended recess 24 of square section at its outer end to receive the polygonal member 4. The outer part 20 carries the cam lock assembly 22, described in more detail below. The outer part 20 has a pair of spaced projecting bosses 25, each with a transverse through hole 26, and an axially-extending aperture 27 adjacent the boss 25 extending through the wall of the outer part 20 to the recess 24. Axially inwardly of the boss 25 the outer part 20 flares and then steps radially inwardly to form an axial abutment face 28 and an inner polygonal portion 29 of reduced diameter. The inner end of the portion 29 has a pair of blind bores 30 to receive screws 31 by which it is attached to the inner part 21 of the intermediate assembly 3.

The inner part 21 is substantially cylindrical and cup-shaped. At its inner end it has a pair of countersunk bores 32 for the screws 31. At its outer end it has a polygonal recess 33 to receive the inner polygonal portion 29 of the outer part 20, and it terminates in an abutment face 34 with which the axial abutment face 28 engages. The external profile of the inner part 21 is cylindrical at the inner end, which is rotatably received in the blind bore 14 in the hub portion 13 of the base member 2, and has a surface 56 adapted to engage with the end surface 55 of the hub portion 13. A flange 35 is formed adjacent the outer end of the inner part 21. The inner face 36 of the flange 35 is adapted to engage with the axial face 16 of the base member 2, while the outer face 37 is angled and adapted to engage the clamping ring 23.

The polygonal member 4 is of square section, with an annular flange 40 at its outer end. The flange 40 engages with the outer end of the outer part 20. The outer end of the polygonal member 4 is formed with a screw-threaded blind bore 41 to receive a male screw-threaded member on the accessory. Adjacent its inner end the polygonal member 4 has a groove 42 in which part of the cam lock assembly 22 engages to lock the polygonal member against axial movement.

The cam lock assembly 22 comprises a locking plate 45 which can slide radially in the aperture 27 in the outer part 20 between a locking position in which it engages the polygonal member 4 to lock it in place in the recess 24, and a release position in which the polygonal member 4 can be removed from or inserted into the recess 24. The locking plate 45 and the aperture 27 have a complementary stepped outline to limit the movement of the locking plate 45 into the recess 24. At its radially inner edge the locking plate 45 has a projection 46 adapted to engage in the groove 42 in the polygonal member 4 to prevent axial movement of the polygonal member 4.

The locking plate 45 is operated by a cam lever 47. The cam lever 47 is mounted for rotation on the bosses 25 by means of a pivot pin 48 received in the holes 26. A cam 49 on the lever 47 engages the locking plate 45 in the locking position shown, in order to maintain it in contact with the polygonal member 4. To release the engagement the outer end of the cam lever 47 is rotated through about 90° towards the base member 2. The cam 49 is then no longer in engagement with the locking plate 45 which is free to move radially outwards, releasing the polygonal member 4.

The clamping ring 23, as the locking mechanism 17, is a substantially annular member, having an internal screw thread 50 co-operating with the external screw thread 15 on the hub portion 13 of the base member 2. At its outer end the clamping ring 23 has an inturned flange 51 of stepped outline. The flange 51 has an outer stepped portion 52 to receive the abutment face 28, and an angled face 53 adapted to engage with the outer face 37 of the flange 35 of the inner part 21. The outer surface 54 of the clamping ring 23 is knurled for ease of use. It will be appreciated that as the clamping ring 23 is screwed on to the base member 2, the surfaces 55 and 56 engage, and the face 53 engages the flange 35, to bring the inner face 36 of the flange 35 into engagement with the axial end face 16 of the base member 2, to lock the inner part 21 of the intermediate assembly 3 against rotation relative to the base member 2. Unscrewing the clamping ring 23 releases the engagement and allows the intermediate assembly to rotate relative to the base member 2 to provide a fine adjustment of their relative positions.

For use the device is supplied as shown in Figure 1. The cylindrical part 5 of the base member 2 is placed on an elongate member such as the leg of an angler's seat box and is clamped at the appropriate location by tightening the bolt 9 using the head 10. The polygonal member 4 is then removed from the intermediate assembly 3 by rotating the cam lever 47 to release the cam lock assembly 22. An accessory can then be screwed into the bore 41 of the polygonal member 4. It is important for the accessory to be screwed in tightly, so that it does not move relative to the polygonal member 4. The polygonal member 4 is then re-inserted into the intermediate assembly 3, and the cam lock assembly 22 is locked by rotating the cam lever 47 into the locking position. If the accessory is not at the desired orientation the clamping ring 23 can be unscrewed slightly, to the release position and the intermediate assembly 3 rotated relative to the base member 2 until the accessory is in the correct position. The clamping ring 23 is then tightened again to lock the intermediate assembly 3 to the base member 2.

In practice each accessory will be attached to its own polygonal member 4, which enables the accessories to be changed quickly, simply by releasing the cam lock assembly 22, removing the accessory, replacing it with the new one and locking the cam lock assembly again. If the new accessory is not at the desired orientation, the clamping ring 23 can readily be used to adjust it.

It is also possible for an accessory to terminate in an integral polygonal member, which can similarly be locked in place and have its orientation adjusted by use of the clamping ring 23.

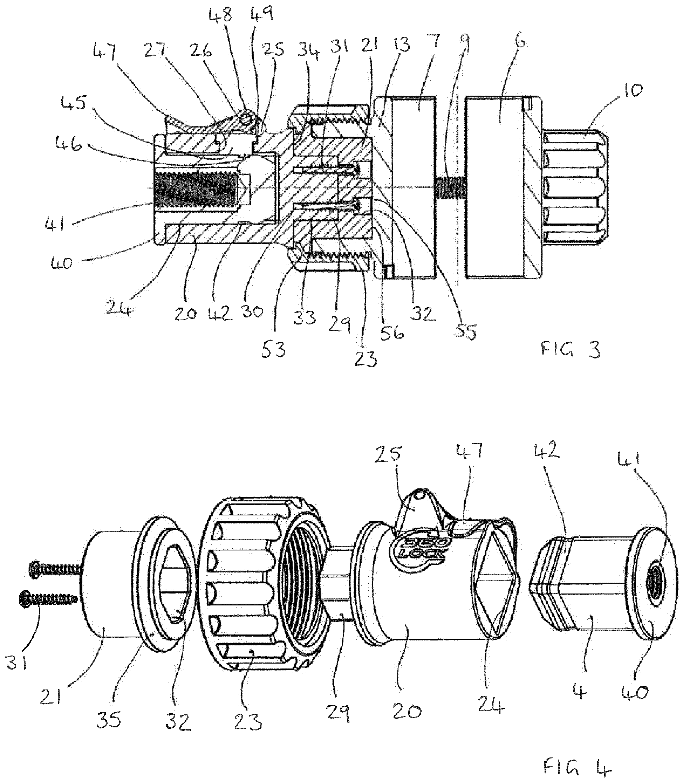

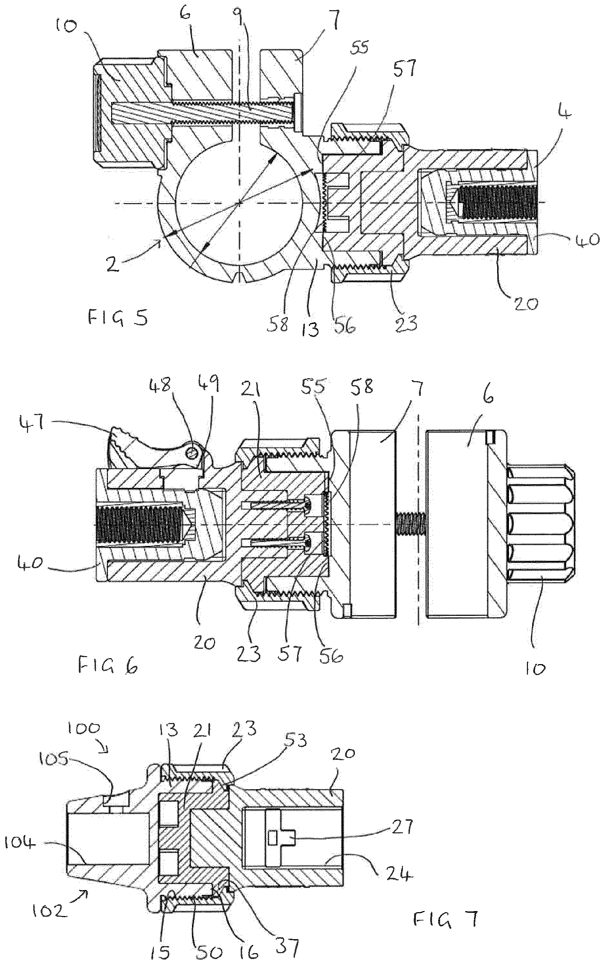

Figures 5 and 6 show a modification of Figures 2 and 3, and corresponding reference numerals have been applied to corresponding parts. In the modified assembly of Figures 5 and 6 the engaging surfaces 55 and 56 of the hub portion 13 and the inner part 21 are modified to increase the friction between them when the first locking mechanism 17 is operated. The inner surface 56 of the inner part 21 is provided with teeth 57 round its periphery. The teeth 57 have a small pitch and a small height. Similar teeth 58 are provided on the surface 55 of the blind bore 14 of the hub portion 13. The teeth 57, 58 engage and mesh as the clamping ring 23 is screwed onto the base member 2 and provide an increased frictional engagement between the inner part 21 and the hub portion 13. When the clamping ring 23 is unscrewed to release the engagement for adjustment of the relative positions of the intermediate assembly 3 and the base member 2, the teeth 57, 58 can disengage and jump over each other to allow the relative rotation needed. The teeth engage and mesh again when the clamping ring is screwed on again. The small pitch of the teeth 57, 58 ensures that fine adjustment of the relative positions of the intermediate assembly and base member is still provided, and in fact the teeth 57, 58 may provide an indexing mechanism for the adjustment. Otherwise the construction and operation of the embodiment of Figures 5 and 6 is the same as that of Figures 1 to 4.

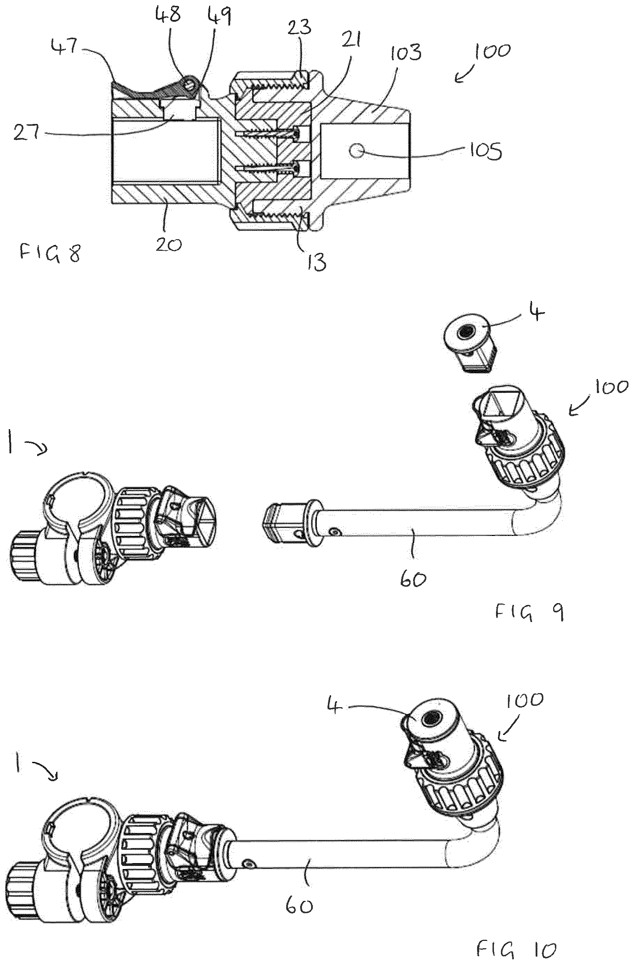

Figures 7 and 8 show a modified device 100, and Figures 9 and 10 show the device 1 of Figures 1 to 4 and the device 100 connected by a bar 60. In Figures 9 and 10 the bar 60 is in effect the accessory. The bar 60 is substantially L-shaped, and at its inner end 61 is screwed into the polygonal member 4. At its outer end 62 it carries the device 100.

Figures 7 and 8 show the device 100 in detail. It is a modification of the device 1 of Figures 1 to 4, and corresponding reference numerals have been applied to corresponding parts. Thus, in Figures 7 and 8 the construction of the intermediate assembly 3 is identical to that of Figures 1 to 4. As the polygonal member 4 is not shown in Figures 7 and 8, the shape of the aperture 27 can be seen clearly. The base member 102 is modified, although the hub portion 13 is the same as that of Figures 1 to 4. Instead of the cylindrical part 5 the base member 102 has a frusto-conical member 103, having a cylindrical axial recess 104 for receiving the end of the bar 60. The member 103 has a radial countersunk bore 105 for receiving a grub screw (not shown) for securing the bar 60 to the base member 102. The device 100 is otherwise the same in construction and operation as the device 1 of Figures 1 to 4.

Figures 9 and 10 show the devices 1, 100 and the bar 60. It will be appreciated that the bar 60 and device 100 form the accessory mounted on the device 1, and that the device 100 is adapted to carry a further accessory, such as a rod rest or bait holder (not shown). The devices 1, 100 are adjustable by means in particular of the intermediate assemblies 3 to ensure that the orientation both of the bar 60 and the further accessory are as desired. Further, the cam lock assemblies provide for quick release and attachment of the accessories, enabling them to be changed easily by the angler as required.

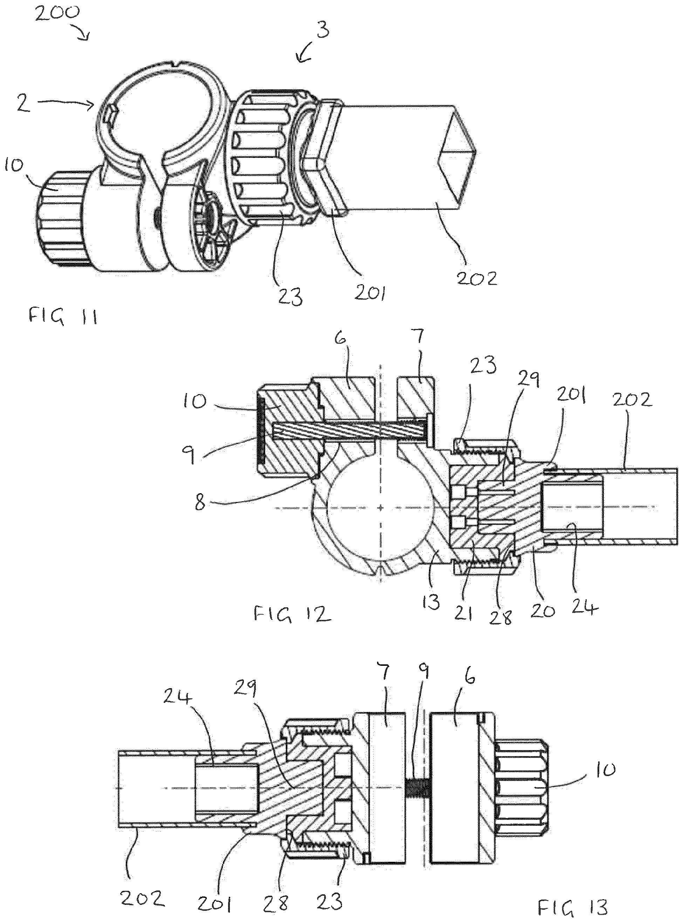

Figures 11 to 13 show another modified device 200, which is a modification of the device 1 of Figures 1 to 3. Corresponding reference numerals have been applied to corresponding parts. It will be appreciated that the intermediate assembly 3 of Figures 11 to 13 is turned through 90° in comparison with Figures 1 to 3.

In Figures 11 to 13 the intermediate assembly 3 has been modified. The inner part 21 is the same as that of Figures 1 to 3, while the outer part 20 is modified. The outer part 20 still has the inner polygonal portion 29 and the axial abutment face 28, but at the outer end 201 it is of square outline rather than being cylindrical and mounts a hollow bar 202 in which an accessory can be received. The outer part 20 also still has the open-ended recess 24 of square section to receive a polygonal member (not shown). The second locking mechanism 17 is omitted from the embodiment of Figures 11 to 13. However, a cam lock assembly or a grub screw or any other suitable locking mechanism could be provided if required. Otherwise, the construction and operation of this embodiment is the same as that of Figures 1 to 3.

It will also be appreciated that the second locking mechanism could be omitted from the embodiments of Figures 1 to 10.

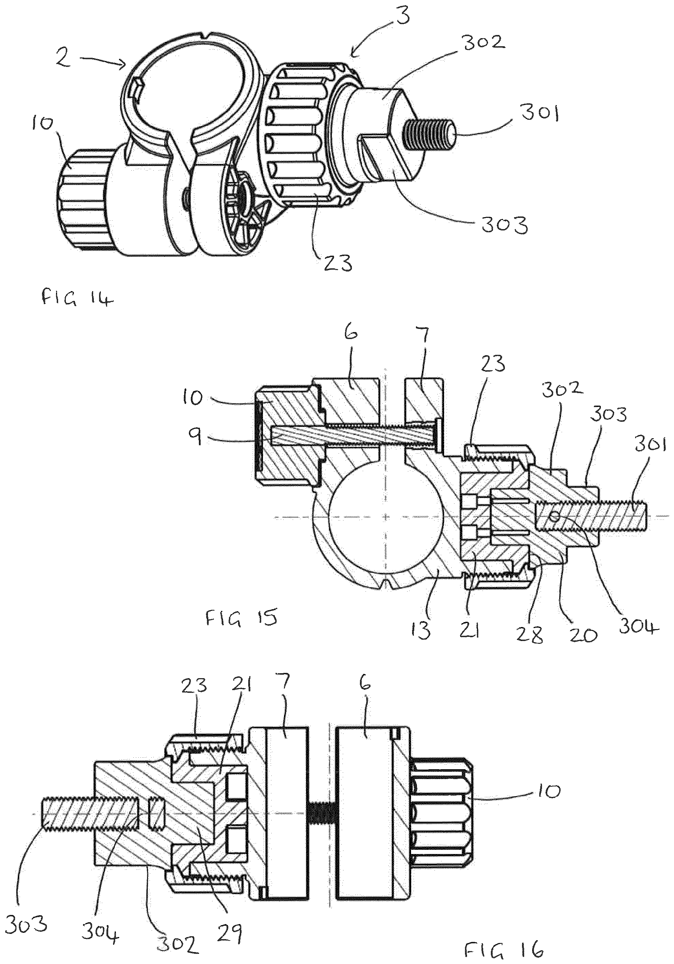

Figures 14 to 16 show another modified device 300, which is a modification of the device 1 of Figures 11 to 13. Corresponding reference numerals have been applied to corresponding parts. In Figures 14 to 16 the intermediate assembly 3 has been modified. The inner part 21 is the same as that of Figures 11 to 13, while the outer part 20 is modified. The outer part 20, instead of being formed with the recess 24, is solid and carries a male screw-threaded member 301 for engaging a female screw-threaded bore on the accessory or in a member attached to the accessory. The member 301 may be moulded into the outer part 20, or otherwise secured in any suitable way. The member 303 has a transverse bore 304 at its inner end which is filled with the material of the part 20 in order to assist retention and resist rotation of the member 303 relative to the outer part 20. The outer end 302 of the outer part 20 is cylindrical, and is formed with opposing flat surfaces 303. These can be grasped by a wrench or spanner to hold the intermediate assembly at the desired orientation while the clamping ring 23 is tightened.

For use, the base member 2 is attached to an elongate member, and the accessory screwed onto the member 301. It will normally be necessary for the screw threads to be fully engaged, that is, for the accessory to be screwed on as tightly as possible, so that it is securely attached. If it is not at the desired orientation the clamping ring 23 can be unscrewed slightly to the release position, and the accessory put in the correct place by adjusting the orientation of the outer part 20, using the flat surfaces 303 as necessary. The accessory is then held in the correct position while the clamping ring 23 is tightened to the locked position. In this embodiment a second locking mechanism will not normally be provided.

The embodiments of Figures 1 to 13 where the accessory has a male screw thread for connection with a female screw thread of the polygonal member or the intermediate assembly could be modified so that the accessory has the female screw thread and the polygonal member or the intermediate assembly the male screw thread. Equally, with the embodiment of Figures 14 to 16, the outer part 20 could be provided with the female screw thread, and the accessory with the male screw thread.

## Claims

1. A device (1, 100) for attaching an accessory to an elongate member of an angler's equipment, where the accessory has a terminal member with a longitudinal axis, the device comprising a base member (2, 102) and an intermediate assembly (3, 103), the base member(2, 102) being adapted for connection to the elongate member, and the intermediate assembly (3, 103) being adapted for connection to the accessory and being mounted on the base member for relative rotation about the longitudinal axis, the intermediate assembly having a releasable locking mechanism (17) for locking the intermediate assembly (3, 103) and the base member (2, 102) against relative rotation.

2. A device as claimed in claim 1, in which the releasable locking mechanism comprises a clamping ring (23) having a screw-threaded engagement with the base member (2, 102), such that in a release position the clamping ring (23) allows relative rotation of the intermediate assembly (3, 103) and the base member (2, 102), and in a locked position such relative rotation is prevented.

3. A device as claimed in claim 2, in which in the locked position the clamping ring (23) causes a frictional engagement between the intermediate assembly (3, 103) and the base member(2, 102).

4. A device as claimed in any preceding claim, in which the terminal member of the accessory has a screw-threaded engagement with a polygonal member (4) or the intermediate assembly (3, 103).

5. A device as claimed in any of claims 1 to 3, in which the accessory has an integral polygonal member.

6. A device as claimed in claim 4 or claim 5, in which the polygonal member (4) is received in a corresponding recess (24) in the intermediate assembly (3, 103).

7. A device as claimed in claim 4, in which the terminal member of the accessory has a female screw thread, and the polygonal member (4) or the intermediate assembly (3, 103) has a corresponding male screw thread.

8. A device as claimed in any of claims 4 to 7, in which a polygonal member (4) is used and the device has a second releasable locking mechanism (18) for locking the polygonal member against axial movement.

9. A device as claimed in claim 8, in which the second locking mechanism comprises a cam lock mechanism (22).

10. A device as claimed in any preceding claim, in which the base member (2, 102) has a substantially cylindrical outer end (13) forming a bore (14) for receiving the intermediate assembly (3, 103), and an external screw-thread (15) for engagement with the clamping ring (23).

11. A device as claimed in any preceding claim, in which the intermediate assembly (3, 103) comprises an outer part (20) adapted for connection to the accessory, and an inner part (21) secured to the outer part (20) and rotatable in the bore (14) in the base member (2, 102).

12. A device as claimed in claim 11, in which the inner part (21) has a radial flange (35) providing an axial face (36) adapted to engage a corresponding axial face (16) on the base member (2, 102) and the clamping ring (23) has an internal screw thread (50) for engagement with the external screw thread (15) on the base member, and an abutment face (51) adapted to engage with a corresponding abutment face (37) on the inner part.

13. A device as claimed in claim 11 or claim 12, in which the inner part (21) and the base member (2, 102) have corresponding surfaces (55, 56) which engage axially when the clamping ring (23) is screwed into the locked position, the surfaces being provided with small teeth (57, 58) which engage and mesh.

14. A device as claimed in any of claims 11 to 13, in which the outer part (20) has a cylindrical profile, with a recess (24) for receiving the polygonal member (4) or the terminal member of the accessory.

15. A device as claimed in claim 14, in which the outer part (20) also has a radial aperture (27) opening into the recess, the cam lock mechanism (22) being mounted on the outer part (20), and comprising a cam lever (47) rotatably mounted on the outer part (20) and acting on a locking plate (45) mounted in the aperture.
